# EUROPÄISCHE PATENTSCHRIFT

(11) **EP 1 295 664 B1**
(45) Veröffentlichungstag und Bekanntmachung des Hinweises auf die Patenterteilung: **26.03.2008**
(21) Anmeldenummer: 01122798.0
(22) Anmeldetag: 21.09.2001
(51) Int. Cl.: B23H 7/08

(54) **Drahtelektrode zum funkenerosiven Schneiden**
Wire electrode for electric-discharge machining
Fil-électrode pour usinage par électroérosion

(43) Veröffentlichungstag der Anmeldung: 26.03.2003
(73) Patentinhaber: Berkenhoff GmbH, 35452 Heuchelheim (DE)
(72) Erfinder: Groos, Heinrich, 35745 Herborn (DE); Barthel, Bernd, 35745 Herborn (DE); Nöthe, Tobias, 35745 Herborn (DE); Dietrich, Christoph, 35745 Herborn (DE)
(74) Vertreter: Böck, Bernhard

(56) Entgegenhaltungen:
- DE-A- 19 510 740
- DE-A- 19 913 694
- US-A- 5 196 665
- US-A- 5 945 010
- PATENT ABSTRACTS OF JAPAN vol. 018, no. 173 (M-1581), 24. März 1994 (1994-03-24) & JP 05 337741 A (FUJIKURA LTD), 21. Dezember 1993 (1993-12-21)

## Beschreibung

Die Erfindung betrifft eine Drahtelektrode zum funkenerosiven Schneiden von Metallen, elektrisch leitender Keramik etc. mit entweder einem homogenen Kern aus einem Metall oder einer Metalllegierung oder einem Verbundkern und mit mindestens zwei beim Erodieren verschleißender Mantelschichten aus Zn-Legierungen.

Bei der Entwicklung von Drahtelektroden für das funkenerosive Schneiden von Metallen oder anderen elektrisch leitenden Körpern hat es sich als vorteilhaft herausgestellt, wenn eine ummantelte Elektrode verwendet wird, bei der der Kern zum Einen die notwendige Festigkeit und zum Anderen die elektrische Leitfähigkeit bringt und der eigentliche Erodiervorgang von einer Mantelschicht übernommen wird, welche aus reinem Zink oder einer Zinklegierung besteht. Eine reine Zinkschicht führt zwar zu einer guten Abtragsleistung, jedoch verschleißt die reine Zinkschicht derart schnell, dass, bevor der Erodierdraht aus dem Schneidspalt eines mäßig hohen Werkstückes austritt, diese bereits vollständig verbraucht ist, so dass die Elektrode letztendlich mit dem Kernmaterial schneidet. Dies hat zur Folge, dass die Schnittleistung der Elektrode insgesamt erheblich niedriger wird.

Aus diesem Grunde ist es bekannt (EP 0 312 674), als Mantelschicht eine β-Mantelschicht vorzusehen, welche zwar theoretisch aufgrund des geringeren Zinkgehaltes eine geringere Schnittleistung als eine reine Zinkmantelschicht haben soll, die jedoch infolge des weitaus geringeren Verschleißes im praktischen Schneidprozess bereits bei geringen Werkstückhöhen eine höhere Schneidleistung aufweist.

Des Weiteren ist es aus der DE 195 10 740 A1 bekannt, die Mantelschicht aus einem γ-Messing herzustellen, wobei hier, da im γ-Messing der Zinkanteil größer als im β-Messing ist, eine erhöhte Abtragsleistung erhalten wird. Allerdings hat es sich im praktischen Betrieb jedoch herausgestellt, dass diese γ-Schicht weitaus schneller verschleißt, als eine β-Mantelschicht, so dass sich die Vorteile nur bei geringen Werkstückhöhen bemerkbar machen.

Weiterhin ist es aus der DE 199 13 694 A1 bekannt, eine Drahtelektrode mit zwei übereinander liegenden Mantelschichten herzustellen, wobei die unten liegende Mantelschicht aus einem β-Messing und die darüber liegende Mantelschicht aus reinem Zink oder aus einer Zinklegierung mit über 80 % Zink besteht. Bei dieser Elektrode handelt es sich um eine sogenannte Kombielektrode, welche gleichermaßen für einen Schnellschnitt wie auch für einen Feinschnitt geeignet ist, bei dem es auf einen hohen Verschleiß der Mantelschicht weniger ankommt. Wird eine derartige Elektrode für einen Schnellschnitt eingesetzt, so verbessert bei diesem Verfahren die äußere, schnell verschleißende Zinkmantelschicht allenfalls das Zündverhalten der Elektrode, während der eigentliche Erodiervorgang mit Hilfe der β-Mantelschicht erfolgt. Andererseits, wenn diese Elektrode für den Feinschnitt eingesetzt wird, wird lediglich die äußere Mantelschicht verbraucht und die darunter liegende β-Mantelschicht bleibt erhalten. Der Vorteil dieser Elektrode besteht darin, dass man mit ein und derselben Drahtelektrode, d. h. ohne Umrüstzeit sowohl einen Schnellschnitt durchführen kann wie auch einen Feinschnitt, bei dem es auf eine extrem glatte Oberfläche ankommt.

Aus PATENT ABSTRACTS OF JAPAN Bd. 018, Nr. 173 (M-1581), 24. März 1994 (1994-03-24) & JP 05 337741 A (FUJIKURA LTD.), 21. Dezember 1993 (1993-12-21) ist eine Drahtelektrode zum funkenerosivem Schneiden von Metallen nach dem Oberbegriff des Anspruchs 1 bekannt, die auf einem Verbundkern drei Mantelschichten aufweist. Die äußere Mantelschicht besteht aus γ-Messing und die relativ hierzu innere Mantelschicht besteht aus β-Messing.
Der Erfindung liegt die Aufgabe zugrunde, die Schnittleistung der Drahtelektrode zu erhöhen.

Diese Aufgabe wird erfindungsgemäß dadurch gelöst, dass die innere Mantelschicht überwiegend aus β-Messing und die äußere Mantelschicht überwiegend aus γ-Messing besteht, wobei das Verhältnis der Schichtdicke von β-Messing zu γ-Messing zwischen 0,3 bis 7 liegt, der Anteil an β/β'-Phase bzw. γ-Phase in den beiden Mantelschichten zumindest 90 % beträgt, und die Summe der Stärke beider Mantelschichten im Verhältnis zum Außendurchmesser der Elektrode zwischen 0,1 bis 0,3 liegt.

Überraschenderweise führt die Kombination einer unteren β-Mantelschicht mit einer darüber liegenden γ-Mantelschicht zu Schneidleistungen, die über derjenigen liegen, welche mit einer reinen γ-Mantelschicht bzw. mit einer reinen β-Mantelschicht zu erreichen sind.

Ein Ausführungsbeispiel der Erfindung ist im Folgenden anhand der Zeichnung näher beschrieben. In dieser zeigen:
- Fig. 1: einen Querschnitt durch eine erfindungsgemäße Drahtelektrode,
- Fig. 2: ein Diagramm der Schnittratensteigerung in Abhängigkeit der Schichtdicke von β-Messing und γ-Messing,
- Fig. 3: ein Diagramm der Schnittratensteigerung in Abhängigkeit der Kombination einer γ- und β-Mantelschicht gemäß der Erfindung.

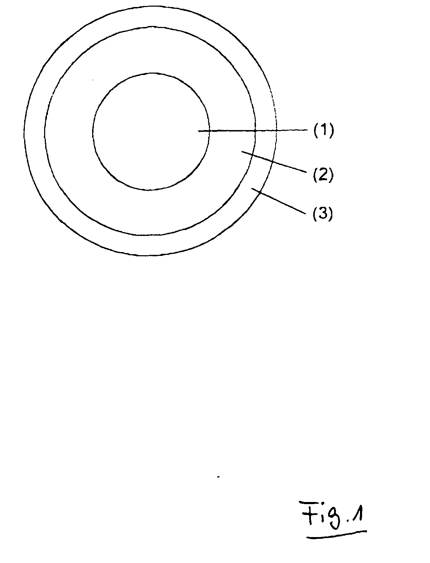

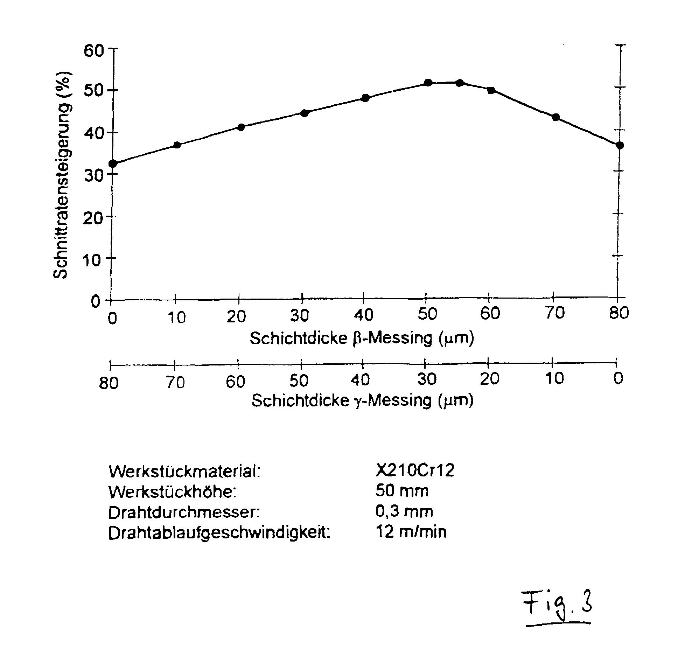

In Fig. 3 ist die Schnittratensteigerung bei der erfindungsgemäßen Erodierelektrode gemäß Fig. 1 dargestellt, wobei der Drahtdurchmesser 0,3 mm und die Drahtablaufgeschwindigkeit 12 m/min. betragen hat. Es wurde hier ein Werkstück aus einem X210Cr12-Stahl geschnitten, welches eine Werkstückhöhe von 50 mm hatte.

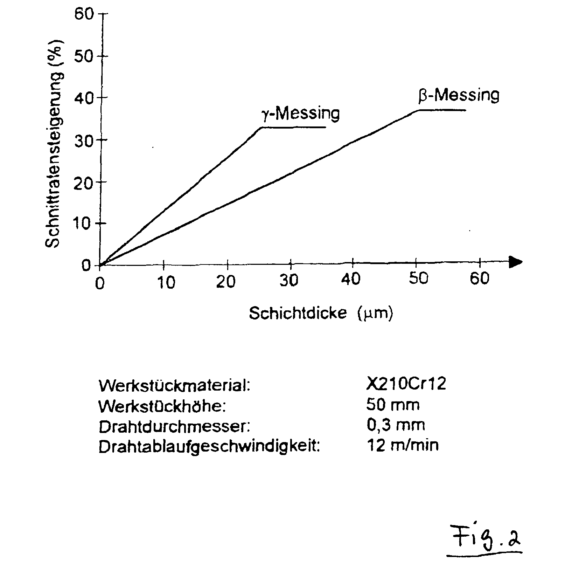

Auf der Abszisse des Diagramms in Fig. 2 ist die Schichtdicke in µm aufgetragen und zwar einmal für eine γ-Mantelschicht 3 und einmal für eine β-Mantelschicht 2, welche als alleinige Schicht auf einer Drahtelektrode aufgebracht ist. Bei den gegebenen Parametern zeigte sich, dass bei Verwendung einer γ-Mantelschicht die Schnittratensteigerung für das spezielle Werkstück mit wachsender Schichtdicke des γ-Messings wesentlich größer ist, als die für eine β-Messingschicht. Allerdings zeigte sich weiter, dass eine Schnittratensteigerung bei einer Erhöhung der Schichtdicke etwa ab 25 µm bei einem γ-Messing nicht mehr erreicht werden konnte, sondern die Schnittrate blieb konstant, was darauf hindeutet, dass die restliche Mantelschicht auch nach dem Austritt aus dem Schneidspalt noch vollständig aus γ-Messing bestand, jedoch wurde der Prozess aufgrund der überhöhten Spaltkontamination zunehmend instabil und die Schnittrate bleibt zunächst konstant. Die gleichen Versuche für eine Mantelschicht aus β-Messing zeigen, dass die Schnittratensteigerung mit wachsender Mantelschicht wesentlich langsamer erfolgt, dass jedoch im Endeffekt bei ca. 50 µm ein Maximum der Schnittratensteigerung erhalten wird, die über der von γ-Messing liegt. Eine weitere Erhöhung der Mantelschicht führte auch hier zu keiner weiteren Schnittratensteigerung.

Durch eine erfindungsgemäße Kombination einer β-Mantelschicht mit einer γ-Mantelschicht konnte insgesamt eine Schnittrate erzielt werden, die ca. 30 % über der der maximalen Schnittrate der einzelnen Komponente liegt. Für die Erreichung des Maximums der Schnittrate ist es maßgebend, dass die Schichtdicken der einzelnen Mantelschichten in einem bestimmten Verhältnis zueinander liegen und auch die Mantelschicht als solche in einem bestimmten Verhältnis zum Durchmesser der Drahtelektrode liegt.

Die besten Ergebnisse, d. h. die größte prozentuale Steigerung wird erreicht, wenn das Verhältnis der Schichtdicke von β- zu γ-Messing zwischen 1, 3 bis 3 liegt, wobei das β wie auch das γ-Messing zumindest jeweils zu 90 % aus β- bzw. aus γ-Phase besteht, wobei gleichermaßen gewährleistet ist, dass die Verteilung des γ-Messings bzw. β-Messings über die Dicke der Mantelschicht im Wesentlichen konstant ist. Hierbei entstehen selbstverständlich Übergangszonen zwischen dem γ-Messing und dem β-Messing und dem β-Messing und dem Kern 1, in denen die Anteile der γ-Phase bzw. der β-Phase entsprechend abnehmen. Diese Übergangsbereiche sind jedoch klein im Verhältnis zur übrigen Dicke der jeweiligen Mantelschicht.

Als Kern 1 für eine erfindungsgemäße Drahtelektrode kann entweder ein homogener Kupferkern oder eine homogene Messinglegierung dienen. Gleichermaßen sind jedoch auch Verbundkerne einsetzbar, wobei es sich als vorteilhaft herausgestellt hat, als Kern eine Stahlseele zu verwenden, die zur Verbesserung der Leitfähigkeit mit einer Kupferschicht oder einer Messingschicht umgeben ist.

Die β-Phase der β-Messingschicht hat bei niedriger Temperatur ein geordnetes Gitter mit definierten Gitterplätzen für das Kupfer und Zink, während bei Überschreitung einer gewissen Temperatur diese Ordnung in eine ungeordnete Struktur übergeht. Da die Umwandlung der ungeordneten β-Phase in die geordnete β'-Phase nach herrschender Meinung nicht zu unterdrücken ist und auch in ihren mechanischen wie elektrischen Eigenschaften nur geringe Auswirkung hat, wird vorstehend nur von einer β-Phase gesprochen.

### Bezugszeichenliste

- 1: Kern
- 2: β-Mantelschicht
- 3: γ-Mantelschicht

## Patentansprüche

1. Drahtelektrode zum funkenerosiven Schneiden von Metallen, elektrisch leitender Keramik etc. mit entweder einem homogenen Kern (1) aus einem Metall oder einer Metalllegierung oder einem Verbundkern und mit mindestens zwei beim Erodieren verschleißender Mantelschichten aus Zn-Legierungen, wobei die innere Mantelschicht (2) überwiegend aus β-Messing und die äußere Mantelschicht (3) überwiegend aus γ-Messing besteht, wobei das Verhältnis der Schichtdicke von β-Messing zu γ-Messing zwischen 0,3 bis 7 liegt,
**dadurch gekennzeichnet,**
**dass** der Anteil an β/β'-Phase bzw. γ-Phase in den beiden Mantelschichten zumindest 90 % beträgt, und die Summe der Stärke beider Mantelschichten im Verhältnis zum Außendurchmesser der Elektrode zwischen 0,1 bis 0,3 liegt.

2. Drahtelektrode nach Anspruch 1,
**dadurch gekennzeichnet,**
**dass** das Verhältnis der Schichtdicke von β-Messing zu γ-Messing zwischen 0,7 bis 5 liegt.

3. Drahtelektrode nach Anspruch 1 oder 2,
**dadurch gekennzeichnet,**
**dass** das Verhältnis der Schichtdicke von β-Messing zu γ-Messing zwischen 1,3 bis 3 liegt.

4. Drahtelektrode nach einem der Ansprüche 1 bis 3,
**dadurch gekennzeichnet,**
**dass** der Kern aus Kupfer, Messing oder einem Verbundkern mit einer Seele aus Stahl mit einer Kupfer- oder Messingbeschichtung besteht.

5. Drahtelektrode nach einem der Ansprüche 1 bis 4,
**dadurch gekennzeichnet,**
**dass** die γ-Messing-Schicht mindestens 1 µm stark ist.

6. Drahtelektrode nach einem der Ansprüche 1 bis 5,
**dadurch gekennzeichnet,**
**dass** die β-Messing-Schicht mindestens 10 µm stark ist.

7. Drahtelektrode nach einem der Ansprüche 1 bis 6,
**dadurch gekennzeichnet,**
**dass** das die γ-Messing-Schicht höchsten 25 µm stark ist.

8. Drahtelektrode nach einem der Ansprüche 1 bis 7,
**dadurch gekennzeichnet,**
**dass** die β-Messing-Schicht höchstens 50 µm stark ist.

## Claims

1. Wire electrode for electric-discharge machining of metals, electrically conducting ceramic etc., comprising either a homogenous core (1) made of a metal or of a metal alloy, or a composite core, and comprising at least two coating layers made of Zn alloys, with said coating layers wearing during erosion, the inner coating layer (2) predominantly comprising β-brass, while the outer coating layer (3) predominantly comprises γ-brass, and the ratio of the coating thickness of β-brass to γ-brass being between 0.3 and 7,
**characterised**
**in that** the fraction of β/β'-phase or γ-phase in the two coating layers is at least 90%, and the sum of the thicknesses of both coating layers in relation to the external diameter of the electrode is between 0.1 and 0.3.

2. Wire electrode according to Claim 1,
**characterised**
**in that** the ratio of the layer thickness of β-brass to γ-brass is between 0.7 and 5.

3. Wire electrode according to Claim 1 or 2,
**characterised**
**in that** the ratio of the layer thickness of β-brass to γ-brass is between 1.3 and 3.

4. Wire electrode according to one of Claims 1 to 3,
**characterised**
**in that** the core comprises copper, brass or a composite core having a steel core with a copper or brass coating.

5. Wire electrode according to one of Claims 1 to 4,
**characterised**
**in that** the γ-brass layer is at least 1 µm thick.

6. Wire electrode according to one of Claims 1 to 5,
**characterised**
**in that** the β-brass layer is at least 10 µm thick.

7. Wire electrode according to one of Claims 1 to 6,
**characterised**
**in that** the γ-brass layer is at most 25 µm thick.

8. Wire electrode according to one of Claims 1 to 7,
**characterised**
**in that** the β-brass layer is at most 50 µm thick.

## Revendications

1. Fil-électrode permettant le découpage par électroérosion de métaux, de céramiques électroconductrices etc., avec soit un noyau homogène (1) en métal ou en un alliage à base de métaux, soit un noyau composite, et avec au moins deux enveloppes en alliages à base de Zn qui s'usent lors de l'érosion, l'enveloppe interne (2) se composant majoritairement de laiton β et l'enveloppe externe (3) majoritairement de laiton γ, le rapport de l'épaisseur des couches entre le laiton β et le laiton γ étant compris entre 0,3 et 7,
**caractérisé en ce que** la part de phase β/β' et/ou de phase γ dans les deux enveloppes est au moins de 90 %, et **en ce que** la somme de l'épaisseur des deux enveloppes par rapport au diamètre extérieur de l'électrode est comprise entre 0,1 et 0,3.

2. Fil-électrode selon la revendication 1,
**caractérisé en ce que** le rapport de l'épaisseur des couches entre le laiton β et le laiton γ est compris entre 0,7 et 5.

3. Fil-électrode selon la revendication 1 ou 2,
**caractérisé en ce que** le rapport de l'épaisseur des couches entre le laiton β et le laiton γ est compris entre 1,3 et 3.

4. Fil-électrode selon l'une quelconque des revendications 1 à 3,
**caractérisé en ce que** le noyau se compose de cuivre, de laiton ou d'un noyau composite avec une âme en acier avec une couche en cuivre ou en laiton.

5. Fil-électrode selon l'une quelconque des revendications 1 à 4,
**caractérisé en ce que** la couche de laiton γ a une épaisseur d'au moins 1 µm.

6. Fil-électrode selon l'une quelconque des revendications 1 à 5,
**caractérisé en ce que** la couche de laiton β a une épaisseur d'au moins 10 µm.

7. Fil-électrode selon l'une quelconque des revendications 1 à 6,
**caractérisé en ce que** la couche de laiton γ a une épaisseur maximale de 25 µm.

8. Fil-électrode selon l'une quelconque des revendications 1 à 7,
**caractérisé en ce que** la couche en laiton β a une épaisseur maximale de 50 µm.
